# EUROPÄISCHE PATENTSCHRIFT

(11) **EP 0 553 110 B1**
(45) Veröffentlichungstag und Bekanntmachung des Hinweises auf die Patenterteilung: **06.12.1995**
(21) Anmeldenummer: 91916309.7
(22) Anmeldetag: 21.09.1991
(51) Int. Cl.: G01N 27/416

(54) **SCHICHTSYSTEM FÜR GASSENSOREN UND VERFAHREN ZU DESSEN HERSTELLUNG**
LAMINATED SYSTEM FOR GAS SENSORS, AND A PROCESS FOR PRODUCING IT
SYSTEME STRATIFIE POUR DETECTEURS DE GAZ ET DISPOSITIF POUR LEUR FABRICATION

(30) Priorität: 20.10.1990 DE 4033388
(43) Veröffentlichungstag der Anmeldung: 04.08.1993
(73) Patentinhaber: ROBERT BOSCH GMBH, 70442 Stuttgart (DE)
(72) Erfinder: FRIESE, Karl-Hermann, D-7250 Leonberg (DE); WIEDENMANN, Hans-Martin, D-7000 Stuttgart (DE); GÖHRING, Eberhard, D-7141 Schwieberdingen (DE)
(86) Internationale Anmeldenummer: DE9100749
(87) Internationale Veröffentlichungsnummer: WO9207253

(56) Entgegenhaltungen:
- EP-A- 0 331 513
- EP-A- 0 369 238
- Patent Abstracts of Japan, Band 11, Nr 186, P586, Zusammenfassung von JP 62- 14055, publ 1987-01-22

## Beschreibung

### Stand der Technik

Die Erfindung geht aus von einem Schichtsystem und einem Verfahren zur Herstellung von Schichtsystemen für Gassensoren nach der Gattung des Hauptanspruchs. Derartige Schichtsysteme sind zum Beispiel aus der DE-PS 28 52 647 bekannt.

Es hat sich jedoch gezeigt, daß eine poröse Deckschicht allein die Elektrodenschicht nicht immer ausreichend gegen Schadstoffe aus dem Abgas wie beispielsweise Silizium, Phosphor, Zink, Blei und deren Verbindungen schützen kann. In der EP-A2-0331 513 wurde daher vorgeschlagen, Erdalkalimetalloxide auf die Oberfläche oder in die Poren der Deckschicht einzubringen. Dadurch werden die gasförmigen organischen oder anorganischen Siliziumverbindungen aufgefangen und in stabile Verbindungen umgewandelt, die die Sensorfunktion nicht beeinträchtigen. Erdalkalimetalloxide können zwar den Schadstoff Silizium unter Bildung hochschmelzender Reaktionsprodukte gut abfangen, Blei jedoch nur in Gegenwart anderer Reaktionspartner wie z. B. Silizium und dies dann auch nur unter Bildung niedrig schmelzender Reaktionsprodukte, die zu einem Verstopfen der Poren in der Schutzschicht und somit zu einer Beeinträchtigung der Sensorempfindlichkeit führen.

Beim Motoreinlauf nach der Fahrzeugherstellung kann der Schadstoff Silizium, insbesondere durch Entweichen aus Dichtungsteilen auftreten, wogegen beim Dauerbetrieb Schadstoffe überwiegend aus Kraftstoff- und Öladditiven vorkommen können, wie z. B. Blei, Phosphor, Zink, in Sonderfällen auch Silizium.

Aus der EP-A 2-0373745 ist es weiterhin bekannt, die Elektrodenschicht von Brennstoffzellen oder Gassensoren gegenüber silizium- und/oder aluminiumhaltigen Verbindungen des Meßgases dadurch zu schützen, daß eines oder mehrere Oxide bzw. Verbindungen, die beim Erhitzen Oxide bilden, der Metalle aus der Gruppe Ce, Sm, Mg, Be, Ca, Sr, Ti, Zr, Hf, Y, La, Ce, Pr, Nb, Pm, Sm, Eu, Gd, Tb, Dy, Ho, Er, Tm, Yb, Lu, Th, U, aufgebracht werden.

Aus der US-P 4, 272, 349 ist der Einsatz einer äußeren Schutzschicht aus Al₂O₃ bekannt, die als Getter gegen Katalysatorgifte, im besonderen gegenüber Phosphor, wirkt.

### Vorteile der Erfindung

Das beanspruchte Schichtsystem mit den Merkmalen des Hauptanspruchs hat demgegenüber den Vorteil, daß die Mischoxide die verschiedenen üblicherweise in Abgas auftretenden Schadstoffe, wie z. B. Silizium, Phosphor, Zink oder Blei, abfangen können. Durch die Kombination von Alkalimetallen einerseits und mindestens dreiwertigen Elementen andererseits ergeben sich Mischoxide, deren Reaktionsfähigkeit und thermische Stabilität auf die Schadstoffe angepaßt werden kann. Die erfindungsgemäßen Mischoxid-Getter reagieren mit den Schadstoffen aus dem Abgas zu Reaktionsprodukten mit hohen Schmelzpunkten oberhalb der maximalen Anwendungstemperatur des Schichtsystems. Die hohe Affinität der Alkalioxide zu sauren Oxiden führt zu einer günstigen Getterwirkung gegenüber Silizium und Phosphor. Durch den amphoteren bzw. schwach sauren Charakter der mindestens dreiwertigen Mischoxid-Partner ergibt sich insbesondere auch die Getterwirkung für zweiwertige Schadstoffe, wie beispielsweise Blei oder Zink.

Gegenüber den bekannten Schadstoff-Gettern ermöglicht es die Erfindung somit, ein breiteres Schadstoffspektrum abzudecken.

Durch die in den Unteransprüchen und in den Verfahrensansprüchen aufgeführten Maßnahmen sind vorteilhafte Weiterbildungen und Verbesserungen des im Hauptanspruch angegebenen Schichtsystems möglich. Besonders vorteilhaft ist es, die Mischoxide durch Imprägnieren aus einer bevorzugt wässrigen Lösung, zum Beispiel der Nitrate oder Chloride, oder aus Lösungen von metallorganischen Verbindungen aufzubringen. Die Verbindungen der Alkalimetalle und der drei- oder höherwertigen Elemente werden so ausgewählt, daß sie sich bei Temperaturen knapp oberhalb der Anwendungstemperatur des Sensors zersetzen, wobei die Mischoxide in sehr fein verteilter, hochreaktiver Form entstehen. Das Imprägnierverfahren bietet den weiteren Vorteil, daß zusätzlich zu den Mischoxiden gleichzeitig Katalysatorsubstanzen zur Einstellung der Sensor-Regellage in die poröse Deckschicht eingebracht werden können, insbesondere Edelmetall-Katalysatoren, wie Platin, Palladium, Rhodium o.a.

Nach einer weiteren vorteilhaften Ausführungsform werden die Mischoxide als zusätzliche Schichten auf das fertiggesinterte Schichtsystem Festelektrolyt, Elekrodenschicht, poröse Deckschicht oder auf das noch ungesinterte Schichtsystem aufgebracht, das anschließend zusammen mit dieser zusätzlichen Schicht gesintert wird. Dabei kann die zusätzliche, mischoxidhaltige Schicht direkt auf die Elektrodenschicht, auf die poröse Deckschicht oder aber als Zwischenschicht zwischen der porösen Deckschicht und einer weiteren porösen Deckschicht aufgebracht werden.

Als besonders vorteilhaft hat sich das Lithium-Aluminium-Oxid, Li₂O. Al₂O₃ erwiesen. Weitere, besonders bevorzugte lithiumhaltige Mischoxide sind:
(2) Li₂O . Ga₂O₃
(3) 2Li₂O . Al₂O₃ . Ga₂O₃
(4) 0,02Li₂O . 0,98Al₂O₃
(5) 0,98Li₂O . 0,02Al₂O₃
(6) Li₂O . 0,9Al₂O₃ . 0,1B₂O₃
(7) Li₂O . Ln₂O₃ (Ln = La, Nd, Sm, En, Gd, Dy, Er, Yb)
(8) Li₂O . Y₂O₃
(9) Li₂O . ZrO₂ (ZrO₂ mit 1,5 - 2 Gew%HfO₂)
(10) 3Li₂O . 2ZrO₂ (ZrO₂ mit 1,5 - 2 Gew%HfO₂)
(11) Li₂O . Na₂O.22Al₂O₃
(12) Li₂O . Sc₂O₃
(13) 0,1Li₂O . 0,1Y₂O₃ . 0,8 ZrO₂.

Ein weiteres bevorzugtes Mischoxid ist Natrium-ß-Tonerde, Na₂0.11-Al₂O₃.

Nach dem erfindungsgemäßen Verfahren können in vorteilhafter Weise Schichtsysteme für Abgassensoren, die den Sauerstoffgehalt bestimmen, d. h. für Lambda-Sonden, hergestellt werden. Nach dem Verfahren lassen sich jedoch auch Schichtsysteme für andere Abgassensoren herstellen, z.B. für CO -, (NO)ₓ oder (CH)ₙ - Sensoren. Die danach hergestellten Abgassensoren sind gegenüber Schadstoffen aus dem Abgas weitgehend unempfindlich.

### Beschreibung eines Ausführungsbeispiels

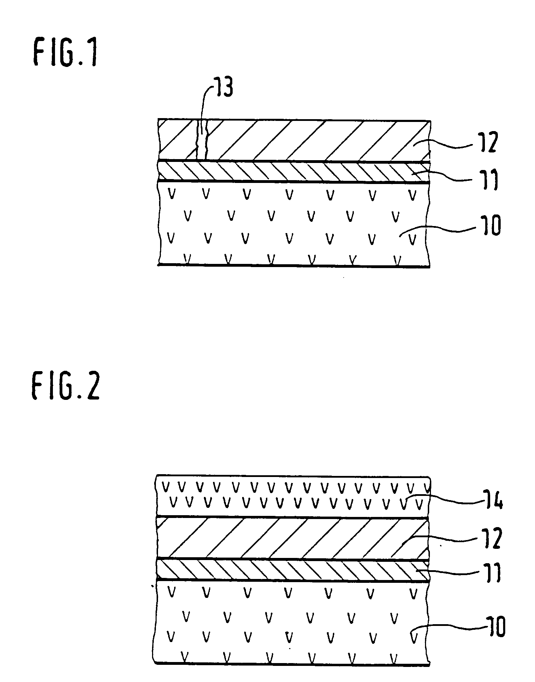

Es wird ausgegangen von einem Schichtsystem nach DE-PS 28 52 647. Die Figur zeigt ein Schichtsystem mit einer üblichen Festelektrolyt-Keramik 10 aus mit Yttrium voll- oder teilstabilisiertem Zirkoniumdioxid, einer darüber aufgebrachten Cermet-Elektrode 11 aus 60 Vol.-% Platin und 40 Vol.-% Y₂O₃-stabilisiertem ZrO₂-Pulver sowie einer porösen Deckschicht 12 aus 75 Gew-% ZrO₂/25 Gew-% Al₂O₃. Mit 13 ist vereinfacht eine der in der gesinterten Schicht 12 in großer Zahl vorhandenen Poren bezeichnet, deren Durchmesser im Bereich von 0,2 bis 15 »m liegt. Das Schichtsystem wird entsprechend den Angaben aus der DE-PS 28 52 647 gesintert.

Das oben beschriebene gesinterte Schichtsystem 10, 11, 12 wird in eine äquimolekulare Lösung von LiNO₃ und Al (NO₃)₃ drei Minuten lang bei Raumtemperatur getaucht. Anschließend wird etwa 10 Minuten lang abtropfen gelassen. Die poröse Deckschicht 12 kann während des Prozeßablaufs durch Kapillarkräfte praktisch vollständig getränkt werden. In einem nächsten Verfahrensschritt wird das Schichtsystem 10, 11, 12 bei 1000 °C zwei Stunden lang an Luft getempert, damit sich aus den Nitraten das Lithium-Aluminium-Mischoxid in und auf der porösen Deckschicht 12 bilden kann.

Das solchermaßen mit Mischoxid modifizierte Schichtsystem kann nun zur Herstellung eines Abgassensors für Sauerstoff, Kohlenmonoxid, Stickoxide oder Kohlenwasserstoffe eingesetzt werden.

## Patentansprüche

1. Schichtsystem auf einem Träger, vorzugsweise auf einem Festelektrolyten, für Gassensoren, insbesondere für einen Abgas-Sensor eines Kraftfahrzeuges, vorzugsweise für einen Sauerstoffsensor, mit einer Elektrodenschicht und mindestens einer porösen Deckschicht aus einem keramischen Material, dadurch gekennzeichnet, daß die poröse Deckschicht (12) und/oder deren Poren (13) wenigstens ein Mischoxid aus wenigstens einem Alkalimetalloxid einerseits und einem thermisch stabilen Oxid eines Elementes mit der Wertigkeit mindestens 3 andererseits, vorzugsweise aus den Gruppen IIIa, IIIb oder IVb, enthalten.

2. Schichtsystem nach Anspruch 1, dadurch gekennzeichnet, daß die Gehalte von Alkalimetalloxiden einerseits und Oxiden des Elementes mit Wertigkeit mindestens 3 andererseits zwischen 0,2 und 99,8 Mol % liegen.

3. Schichtsystem nach einem der vorhergehenden Ansprüche, dadurch gekennzeichnet, daß leichte Alkalimetalloxide eingesetzt werden, vorzugsweise Lithiumoxid.

4. Schichtsystem nach einem der vorhergehenden Ansprüche, dadurch gekennzeichnet, daß von den mindestens dreiwertigen Elementen ein oder mehrere Oxide aus der Gruppe bestehend aus Aluminium, Gallium, Bor, Yttrium, Scandium, Zirkonium oder den Lanthaniden verwendet werden.

5. Schichtsystem nach Anspruch 1, dadurch gekennzeichnet, daß auf und/oder in die poröse Deckschicht wenigstens eine zusätzliche mischoxidhaltige Schicht auf-oder eingebracht ist.

6. Schichtsystem nach Anspruch 1 oder 2, dadurch gekennzeichnet, daß eine zusätzliche, mischoxidhaltige Schicht (14) direkt über der Elektrodenschicht aufgebracht ist.

7. Schichtsystem nach einem der vorhergehenden Ansprüche, dadurch gekennzeichnet, daß auf die zusätzliche, mischoxidhaltige Schicht eine weitere poröse Schutzschicht aufgebracht ist.

8. Schichtsystem nach einem der Ansprüche 1 bis 8, dadurch gekennzeichnet, daß die Deckschicht (12) zusätzlich Katalysatorsubstanzen zur Einstellung der Sensor-Regellage enthält.

9. Verfahren zur Herstellung eines Schichtsystems nach Anspruch 1, wobei auf den Träger, vorzugsweise auf einen vorgesinterten oder fertiggesinterten Festelektrolyten, eine Elektrodenschicht und hierauf eine poröse Deckschicht (12) aus keramischem Material aufgebracht werden und das Schichtsystem anschließend gesintert wird, dadurch gekennzeichnet, daß die poröse Deckschicht (12) mit einer Flüssigkeit imprägniert wird, die mindestens eine Verbindung eines Alkalimetalls sowie eine Verbindung eines Elementes mit Wertigkeit mindestens 3 enthält, welche bei bzw. knapp oberhalb der maximalen Anwendungstemperatur des Sensors zersetzt werden und dabei ein oder mehrere Mischoxide bilden.

10. Verfahren nach Anspruch 9, dadurch gekennzeichnet, daß die Imprägnierflüssigkeit eine Lösung von anorganischen Salzen, insbesondere Nitraten oder Chloriden ist, die durch thermische Zersetzung ein oder mehrere Mischoxide bilden.

11. Verfahren nach Anspruch 9, dadurch gekennzeichnet, daß die Imprägnierflüssigkeit metallorganische Verbindungen enthält, die durch thermische Zersetzung ein oder mehrere Mischoxide bilden.

12. Verfahren zur Herstellung eines Schichtsystems nach einem der Ansprüche 1 bis 4, dadurch gekennzeichnet, daß die die Mischoxide bildenden Stoffe und die die poröse Deckschicht (12) bildenden Stoffe gemeinsam durch Plasmaspritzen und/oder durch Einsintern einer Suspension aufgebracht werden.

13. Verwendung des Schichtsystems nach-einem der vorhergehenden Ansprüche in Abgassensoren für Sauerstoff, Kohlenmonoxid, Stickoxide oder Kohlenwasserstoffe in Kraftfahrzeugen.

## Claims

1. Layer system on a substrate, preferably on a solid electrolyte, for gas sensors, in particular for an exhaust gas sensor of a motor vehicle, preferably for an oxygen sensor, comprising an electrode layer and at least one porous covering layer composed of a ceramic material, characterised in that the porous covering layer (12) and/or its pores (13) contains/contain at least one mixed oxide composed of at least one alkali metal oxide, on the one hand, and a thermally stable oxide of an element having the valency of at least 3, preferably selected from the groups IIIa, IIIb or IVb, on the other hand.

2. Layer system according to Claim 1, characterised in that the contents of alkali metal oxides, on the one hand, and oxides of the element having a valency of at least 3, on the other hand, is between 0.2 and 99.8 mol%.

3. Layer system according to one of the preceding claims, characterised in that light alkali metal oxides are used, preferably lithium oxide.

4. Layer system according to one of the preceding claims, characterised in that, of the at least trivalent elements, one or more oxides from the group comprising aluminium, gallium, boron, yttrium, scandium, zirconium or the lanthanides are used.

5. Layer system according to Claim 1, characterised in that at least one additional mixed-oxide-containing layer is deposited on and/or in the porous covering layer.

6. Layer system according to Claim 1 or 2, characterised in that an additional mixed-oxide-containing layer (14) is deposited directly on top of the electrode layer.

7. Layer system according to one of the preceding claims, characterised in that a further porous protective layer is deposited on the additional, mixed-oxide-containing layer.

8. Layer system according to one of Claims 1 to 8, characterised in that the covering layer (12) additionally contains catalyst substances for the purpose of adjusting the control point of the sensor.

9. Process for producing a layer system according to Claim 1, in which an electrode layer and, on top thereof, a porous covering layer (12) composed of ceramic material are deposited on the substrate, preferably on a presintered or completely sintered solid electrolyte, and the layer system is then sintered, characterised in that the porous covering layer (12) is impregnated with a liquid which contains at least one compound of an alkali metal and one compound of an element having a valency of at least 3, which compounds decompose at or just above the maximum application temperature of the sensor and form one or more mixed oxides in the process.

10. Process according to Claim 9, characterised in that the impregnating liquid is a solution of inorganic salts, in particular nitrates or chlorides, which form one or more mixed oxides as a result of thermal decomposition.

11. Process according to Claim 9, characterised in that the impregnating liquid contains organometallic compounds which form one or more mixed oxides as a result of thermal decomposition.

12. Process for producing a layer system according to one of Claims 1 to 4, characterised in that the substance forming the mixed oxides and the substances forming the porous covering layer (12) are deposited together by plasma jet spraying and/or by sintering-in a suspension.

13. Use of the layer system according to one of the preceding claims in exhaust gas sensors for oxygen, carbon monoxide, nitrogen oxides or hydrocarbons in motor vehicles.

## Revendications

1. Système stratifié sur un support, de préférence sur un électrolyte solide destiné à des détecteurs de gaz, notamment un détecteur de gaz d'échappement d'un véhicule automobile, de préférence pour un détecteur d'oxygène comprenant une couche d'électrode et au moins une couche de recouvrement poreuse formée en matière céramique, caractérisé en ce que la couche de recouvrement (12), poreuse et/ou ses pores (13) contiennent au moins un oxyde mélangé d'au moins un oxyde d'un métal alcalin ainsi qu'un oxyde thermiquement stable d'un élément de valence au moins égale à 3, choisi d'une part dans les groupes IIIa, IIIb ou IVb.

2. Système stratifié selon la revendication 1, caractérisé en ce que la teneur en oxyde de métaux alcalins et d'oxyde d'éléments de valence au moins égale à 3 se situe entre 0,2 et 9,99 % molaire.

3. Système stratifié selon la revendication 1, caractérisé en ce que l'on insère des oxydes de métaux alcalins légers, de préférence de l'oxyde de lythium.

4. Système stratifié selon l'une des revendications précédentes, caractérisé en ce que, parmi au moins les éléments de valence 3, un ou plusieurs oxydes proviennent du groupe comprenant l'aluminium, le gallium, le bore, l'yttrium, le scandium, le zirconium ou les lanthanides.

5. Système stratifié selon la revendication 1, caractérisé en ce que, sur ou dans la couche de recouvrement poreuse, on applique ou on introduit au moins une couche complémentaire contenant un oxyde mélangé.

6. Système stratifié selon les revendications 1 ou 2, caractérisé par une couche d'oxyde supplémentaire (14) contenant un oxyde mélangé, cette couche étant appliquée directement sur la couche de l'électrode.

7. Système stratifié selon l'une des revendications précédentes, caractérisé en ce qu'une autre couche protectrice poreuse est appliquée sur la couche supplémentaire contenant l'oxyde mélangé.

8. Système stratifié selon l'une des revendications 1 à 7, caractérisé en ce que la couche de recouvrement (12) contient des matières pour catalyseur, supplémentaires, pour régler la position de réglage du capteur.

9. Procédé de fabrication d'un système stratifié selon la revendication 1, dans lequel sur le support, de préférence un électrolyte solide préfritté ou dont le frittage est terminé, on applique une couche d'électrode et sur celle-ci une couche de recouvrement (12) poreuse en matière céramique et on fait fritter le système stratifié, caractérisé en ce que la couche de recouvrement (12), poreuse, est imprégnée d'un liquide contenant au moins une combinaison d'un métal alcalin et une combinaison d'un élément dont la valence est au moins égale à 3, et qui se décompose à la température d'application maximale du capteur ou juste au-dessus de celle-ci et forme ainsi un ou plusieurs oxydes mélangés.

10. Procédé selon la revendication 9, caractérisé en ce que le liquide d'imprégnation est une solution de sels organiques, notamment de nitrates ou de chlorures, et qui forme un ou plusieurs oxydes mélangés par décomposition thermique.

11. Procédé selon la revendication 9, caractérisé en ce que le liquide d'imprégnation contient des combinaisons organo-métalliques qui forment un ou plusieurs oxydes mélangés par décomposition thermique.

12. Procédé de fabrication d'un système stratifié selon l'une des revendications 1 à 4, caractérisé en ce que les matières formant les oxydes mélangés et les matières formant la couche de recouvrement poreuse (12) sont appliqués par projection de plastique et/ou par frittage d'une suspension.

13. Application du système stratifié selon l'une des revendications précédentes, au détecteur de gaz d'échappement pour la teneur en oxygène, le monoxyde de carbone, les oxydes d'azote ou les hydrocarbures dans des véhicules automobiles.
